(19) **Europäisches Patentamt / European Patent Office / Office européen des brevets**

(11) **EP 4 461 760 B1**

(12) **EUROPEAN PATENT SPECIFICATION**

(45) Date of publication and mention
of the grant of the patent:
**01.04.2026 Bulletin 2026/14**

(21) Application number: **24170745.4**

(22) Date of filing: **21.05.2021**

(51) International Patent Classification (IPC):
*C08G 63/16* (2006.01)    *C08G 63/183* (2006.01)
*C08J 5/18* (2006.01)    *C08L 67/02* (2006.01)
*B32B 27/36* (2006.01)    *B32B 27/08* (2006.01)

(52) Cooperative Patent Classification (CPC):
(C-Sets available)
**C08G 63/16; B32B 27/08; B32B 27/36;**
**C08G 63/183; C08J 5/18; C08L 67/02;**
C08G 2230/00; C08J 2367/02; C08L 2201/06;
C08L 2203/162; C08L 2205/02; Y02W 90/10

(Cont.)

(54) **BIODEGRADABLE POLYESTER AND ADHERENT PACKAGING FILMS MADE THEREFROM**

BIOLOGISCH ABBAUBARER POLYESTER UND DARAUS HERGESTELLTE HAFTENDE
VERPACKUNGSFOLIEN

POLYESTER BIODÉGRADABLE ET FILMS D'EMBALLAGE ADHÉRENTS FABRIQUÉS À PARTIR
DE CELUI-CI

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.05.2020 IT 202000012184**

(43) Date of publication of application:
**13.11.2024 Bulletin 2024/46**

(62) Document number(s) of the earlier application(s) in
accordance with Art. 76 EPC:
**21730113.4 / 4 157 917**

(73) Proprietor: **Novamont S.p.A.**
**28100 Novara (IT)**

(72) Inventors:
• **AIANI, Mariangela**
**28100 Novara (IT)**

• **BASTIOLI, Catia**
**28100 Novara (IT)**
• **COMAZZI, Paola**
**28040 Marano Ticino (NO) (IT)**
• **GESTI GARCIA, Sebastià**
**10100 Torino (IT)**
• **MILIZIA, Tiziana**
**28100 Novara (IT)**
• **RUSSO, Claudio**
**28100 Novara (IT)**

(74) Representative: **Zanoli, Enrico et al**
**Zanoli & Giavarini S.p.A.**
**Via Melchiorre Gioia, 64**
**20125 Milano (IT)**

(56) References cited:
EP-A1- 2 632 970    WO-A1-02/059199
WO-A1-2006/097353    WO-A1-2009/118377
WO-A2-2011/036272

(52) Cooperative Patent Classification (CPC): (Cont.)

C-Sets
**C08L 67/02, C08L 1/02;**
**C08L 67/02, C08L 3/02;**
**C08L 67/02, C08L 5/04;**
**C08L 67/02, C08L 5/08;**

**C08L 67/02, C08L 67/00;**
**C08L 67/02, C08L 67/04;**
**C08L 67/02, C08L 75/04;**
**C08L 67/02, C08L 75/06;**
**C08L 67/02, C08L 89/00;**
**C08L 67/02, C08L 93/04;**
**C08L 67/02, C08L 97/005**

**Description**

The present invention relates to a biodegradable aliphatic-aromatic polyester particularly suitable for use in the manufacture of adherent films for packaging, comprising units derived from at least one dicarboxylic acid and at least one diol, characterised by a particular friction coefficient range in comparison with conventional biodegradable polyesters.

Another object according to the present invention is a stretchable packaging film comprising said biodegradable polyester.

Packaging films (known as "clingfilm") are known from trade and the literature. Typically, these films are between 6 and 20 μm thick and are used, for example, for packaging food products before the products are placed in a refrigerator or packed in containers.

An important and useful feature of such films is their ability to adhere to both themselves and other non-adherent surfaces without the addition of an adhesive. This property enables the user to wrap one or more layers of film around an object (e.g. food on a plate) and thus seal it hermetically.

Another feature is transparency, which enables the user of such films to identify an object that is wrapped in it without the need to unwrap the object.

In EP 2 632 970 the Applicant described a biodegradable polyester that is particularly suitable for use in the manufacture of adherent films comprising units derived from at least one dicarboxylic acid and at least one diol, characterised by a friction coefficient of more than 10. The biodegradable polyesters described in EP 2 632 970 make it possible to manufacture packaging films characterised by a high ability to adhere to themselves and other surfaces, which is particularly advantageous because it allows considerable ease of use, especially, but not only, for the protection of food trays. However, if the ability to adhere is excessive, this can lead to difficulty in unwinding the film, both industrially and in use of the finished product, with possible breaking of the film during packaging. Breaks occur mainly in the longitudinal direction of the film as a result of transverse stretching.

WO2011/036272 A1 discloses a poly(butylene terephthalate-co-butylene sebacate), a precursor polymer (PP) containing 0.15% by moles of omega undecenoic acid, and having a shear viscosity of 674 Pa.s, a melt strength < 1 at 180°C, and a molecular weight Mn of 55140, which was reacted with alpha,alpha'di-(tert-butylperoxy) diisopropylbenzene in a twin screw extruder, to obtain a biodegradable polyester PB having the following properties: a shear viscosity of 1011 Pa.s, a melt strength of 1.6 g at 180°C, and a gel fraction <1%. According to claim 26, the biodegradable polyester of the invention can be also used in the production of films multilayered with other polymeric materials.

There is therefore a particular need for biodegradable polyesters suitable for use in the manufacture of packaging films that have optimum mechanical properties, excellent transparency properties and a decreased tendency to break without increasing the percentage of breakages throughout the useful life of the product. All of the above limitations are now overcome by the polyester according to the present invention.

The present invention thus relates to a biodegradable aliphatic-aromatic polyester that is particularly suitable for use in the production of packaging films, said polyester having a Poisson's ratio of between 800 and 1700, preferably between 1000 and 1400, and comprising units derived from at least one dicarboxylic acid and at least one diol and having:

-

$$Mn \geq 40000$$

-

$$Mw/q \leq 90000,$$

where q is the percentage by weight of polyester oligomers with a molecular weight $\leq 10000$ as determined by GPC,
in which Poisson's ratio is calculated as the ratio of shear viscosity to melt strength (MS), a film of said polyester having a friction coefficient of between 5 and 10.

Shear viscosity is determined at 180°C with a flow gradient of $\gamma = 103.7 s^{-1}$ using a 1 mm diameter capillary and L/D=30 according to ASTM D3835-90 "Standard Test Method for Determining Properties of Polymer Materials by means of a Capillary Rheometer", while melt strength (MS) is measured according to ISO 16790:2005 at 180°C and $\gamma = 103.7 s^{-1}$ using a capillary of diameter of 1 mm and L/D=30 at a constant acceleration of 6 mm/sec$^2$ and a stretching length of 110 mm.

According said standard method, the value of melt strength (MS) is expressed in Newton. In the present description and examples, however, for easy of reading the values of melt strength (MS) are reported in "grams-strength" according the following conversion: 1N= 102 g-strength; 1cN=1,02 g-strength. Therefore, the values obtained in Newton are converted in grams-strength by multiplying the values by 0,0098.

The aliphatic-aromatic polymers according to the present invention are also characterised by a melt strength between 0.7 and 2.5, more preferably between 0.8 and 2.1

In a particularly preferred aspect according to the invention, the shear viscosity is between 800 and 1200 Pas, preferably between 900 and 1150 Pas; as for the molecular weight "Mn" and "Mw", these are measured by gel permeation chromatography (GPC); "q"= percentage by weight of polyester oligomers having a molecular weight by GPC $\leq$ 10000.

The present invention furthermore relates to a packaging film comprising said biodegradable polyester and a process for producing said film. Preferably, the polyester has a melting point of 55-170°C and a modulus of elasticity of more than 50 MPa.

With regard to the coefficient of friction (COF), this expresses the resistance of a material to slip. With regard to the polyester according to the present invention, the coefficient of friction is determined according to a modification of ASTM standard D1894 "Static and kinetic coefficients of friction of plastic films and sheets". In accordance with the present invention, the coefficient of friction is therefore measured with the method described below.

A polyester sample according to the present invention, in the form of a flexible stretch film with a thickness of between 3 and 50 microns, preferably between 6 and 25 microns, is wrapped around a glass slide covering the support surface measuring approximately 150 x 300 x 2 mm in thickness. The film sample must adhere perfectly to the glass slide and must present a smooth surface without folds. To achieve this condition a brush may be used to remove any air bubbles that may form between the film and the glass slide by applying moderate pressure. The slide is placed in a horizontal position and a stainless steel slide weighing 200$\pm$5 grams and measuring 63.5 x 5 mm thick is placed on it. In order to improve the adhesion of the slide to the surface of the film, moderate pressure is manually applied to its surface. A load cell is connected to one end of the slide by means of a nylon filament. The load cell is positioned on the mobile crossbar of the dynamometer and is able to move at a constant speed of 10 mm/min. The coefficient of friction is defined as the ratio between the force (F) recorded by the dynamometer at the moment when adhesion of the slide to the film is lost (tangential friction force opposing slip) and the weight force (Fg) acting perpendicularly on the two contact surfaces (weight force of the steel slide).

Preferably, the polyester according to the present invention has a gel fraction of less than 5%, more preferably less than 3%, even more preferably less than 1%. The gel fraction is determined by placing a sample of polyester ($X^1$) in chloroform, then filtering the mixture on a 25-45 $\mu$m sieve and measuring the weight of the material remaining on the filter mesh ($X^2$). The gel fraction is determined as the ratio of the material thus obtained to the weight of the sample, i.e. (X2/X1) x100.

In the aliphatic-aromatic polyesters according to the present invention the aromatic moiety primarily comprises at least one polyfunctional aromatic acid and the aliphatic moiety comprises at least one aliphatic dicarboxylic acid and at least one aliphatic diol.

By polyfunctional aromatic acids are meant dicarboxylic aromatic compounds of the phthalic acid type and their esters and heterocyclic dicarboxylic aromatic compounds of renewable origin and their esters. Particularly preferred are 2,5-furandicarboxylic acid and its esters and terephthalic acid and its esters and mixtures thereof.

Renewable sources are those products obtained from sources which, through their intrinsic characteristics, regenerate naturally in the time scale of human life and, by extension, whose use does not endanger natural resources for future generations. A typical example of a renewable source is plant crops.

By aliphatic dicarboxylic acids are meant dicarboxylic acids having between 2 and 22 carbon atoms in the main chain, and their esters. Dicarboxylic acids from renewable sources, their esters and mixtures thereof are preferred, and of these adipic acid, pimelic acid, suberic acid, sebacic acid, azelaic acid, undecandioic acid, dodecandioic acid, brassylic acid and mixtures thereof are preferred. In a particularly preferred embodiment the aliphatic dicarboxylic acids of the biodegradable polyester according to the present invention comprise at least 50% in moles of azelaic acid, adipic acid or mixtures thereof with respect to the total moles of aliphatic dicarboxylic acids.

Dicarboxylic acids with unsaturations within the chain such as itaconic acid and maleic acid are also included.

In the polyester according to the present invention, diols are understood to be compounds bearing two hydroxyl groups. $C_2$ to $C_{13}$ aliphatic diols are preferred.

Examples of aliphatic diols include: 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecandiol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol and mixtures thereof. Of these, 1,4-butanediol, 1,3-propanediol and 1,2-ethanediol and mixtures thereof are particularly preferred. In a particularly preferred form, the diols of the biodegradable polyester according to the present invention comprise at least 50% in moles, preferably at least 80% in moles, of 1,4-butanediol with respect to the total diols in moles.

Aliphatic aromatic polyesters are characterised by a polyfunctional aromatic acid content of between 30-70% in moles, preferably between 40-60% in moles, in relation to the total dicarboxylic acids content in moles.

Aliphatic polyesters obtained from at least one aliphatic dicarboxylic acid and between 0 and 30% of at least one aliphatic diol may be suitably added to the aliphatic-aromatic polyesters according to the invention.

Advantageously, branched compounds may be added to the polyesters according to the invention in an amount of less than 0.5%, preferably less than 0.2% in moles relative to the total content of dicarboxylic acids in moles. The said branched compounds are selected from the group of polyfunctional molecules such as, for example, polyacids, polyols and mixtures thereof. Examples of polyacids are: 1,1,2-ethanetricarboxylic acid, 1,3,5-pentatricarboxylic acid, malic acid, citric acid, tartaric acid, 3-hydroxyglutaric acid, mucic acid, trihydroxyglutaric acid, hydroxyisophthalic acid, their derivatives and mixtures.

Examples of polyols are: glycerol, hexantriol, sorbitol, trimethylolethane, trimethylolpropane, mannitol, 1,2,4-butantriol, xylitol, 1,1,4,4-tetrakis(hydroxymethyl)cyclohexane, arabitol, adonitol, iditol and mixtures thereof.

The polyesters according to the present invention may advantageously contain co-monomers of the hydroxy acid type in percentages of not more than 30% and preferably not more than 20% in moles relative to the total content of dicarboxylic acids in moles. They may be present with either random or block type distribution of the repeating units.

The preferred hydroxy acids are D and L lactic, glycolic, butyric, valeric, hexanoic, heptanoic, octanoic, nonanoic, decanoic, undecanoic, dodecanoic, tridecanoic, tetradecanoic, pentadecanoic, hexadecanoic, heptadecanoic and octadecanoic acids. Preferred are hydroxy acids of the type with 3 or 4 carbon atoms in the main chain.

Mixtures of different polyesters according to the present invention are also included within the invention.

Within the meaning according to the present invention, biodegradable polyesters are understood to be polyesters which are biodegradable according to EN 13432.

The polyester according to the present invention can be used in a mixture with one or more polymers of synthetic or natural origin, whether biodegradable or not, including when obtained by reactive extrusion processes.

Preferably, this reactive extrusion process is carried out by the addition of peroxides, epoxides or carbodiimides.

Preferably said reactive extrusion process is conducted with peroxides in an amount in the range from 0.001 to 0.2% and preferably 0.01-0.1% by weight relative to the sum of the polymers fed to the reactive extrusion process.

As far as the addition of epoxides is concerned, these are preferably used in quantities of 0.1-2%, more preferably 0.2-1% by weight of the sum of the polymers fed to the reactive extrusion process.

If carbodiimides are used, these are preferably used in quantities of 0.05-2%, more preferably 0.1-1% by weight of the sum of the polymers fed to the reactive extrusion process.

Mixtures of these peroxides, epoxides and carbodiimides may also be used.

Examples of peroxides that may advantageously be used are selected from the group of dialkyl peroxides such as: benzoyl peroxide, lauroyl peroxide, isononanoyl peroxide, di-(t-butylperoxyisopropyl)benzene, t-butyl peroxide, dicumyl peroxide, alpha,alpha'-di(t-butylperoxy)diisopropylbenzene, 2,5-dimethyl-2,5-di(t-butylperoxy)hexane, t-butyl cumyl peroxide, di-t-butyl peroxide, 2,5-dimethyl-2,5-di(t-butylperoxy)hex-3-yne, di(4-t-butylcyclohexyl)peroxy dicarbonate, dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

Examples of epoxides that may advantageously be used are all polyepoxides from epoxidised oils and/or styrene - glycidyl ether-methyl methacrylate, glycidyl ether-ethyl methacrylate, included in a range of molecular weights between 1000 and 10000 and with a number of epoxides per molecule in the range from 1 to 30 and preferably between 5 and 25, and epoxides selected from the group comprising: diethylene glycol diglycidyl ether, polyethylene glycol diglycidyl ether, polyglycerol polyglycidyl ether, 1,2-epoxybutane, polyglycerol polyglycidyl ether, isoprene diepoxide, and cycloaliphatic diepoxides, 1,4-cyclohexanedimethanol diglycidyl ether, glycidyl 2-methylphenyl ether, glycerol propoxylatotriglycidyl ether, 1,4-butanediol diglycidyl ether, sorbitol polyglycidyl ether, glycerol diglycidyl ether, tetraglycidyl ether of meta-xylenediamine and diglycidyl ether of bisphenol A and mixtures thereof.

Catalysts may also be used to increase the reactivity of the reactive groups. In the case of polyepoxides, for example, fatty acid salts can be used. Calcium and zinc stearates are particularly preferred.

Examples of carbodiimides that may advantageously be used are carbodiimides selected from the group consisting of: poly(cyclooctylene carbodiimide), poly(1,4-dimethylenecyclohexylene carbodiimide), poly(cyclohexylene carbodiimide), ,poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6'-tetraisopropyldiphenylene carbodiimide) (Stabaxol® D), poly(2,4,6-triisopropyl-1-phenylene carbodiimide) (Stabaxol® P-100), poly(2,6-diisopropyl-1,3-phenylene carbodiimide) (Stabaxol® P), poly(tolyl carbodiimide), poly(4,4'-diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthylenecarbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12-dodecamethylene bis(ethylcarbodiimide) and mixtures thereof.

In particular, the polyester according to the invention may be used in a mixture with biodegradable polyesters of the dicarboxylic acid-diol type, the hydroxy acid type or the polyester-ether type.

As far as biodegradable polyesters of the dicarboxylic acid-diol type are concerned, they may be either aliphatic or aliphatic-aromatic.

Said biodegradable aliphatic polyesters from dicarboxylic-diol acids comprise aliphatic dicarboxylic acids and aliphatic diols, while said biodegradable aliphatic-aromatic polyesters have the aromatic part consisting mainly of polyfunctional aromatic acids of both synthetic and renewable origin, while the aliphatic part consists of aliphatic dicarboxylic acids and aliphatic diols.

Said biodegradable aliphatic aromatic diol polyesters are preferably characterised by an aromatic acid content of between 30 and 90% in moles, preferably between 45 and 70% in moles with respect to the acid component.

Preferably, the polyfunctional aromatic acids of synthetic origin are the dicarboxylic aromatic compounds of the phthalic acid type and their esters, preferably terephthalic acid. Preferably, the polyfunctional aromatic acids of renewable origin are selected from the group comprising 2,5-furandicarboxylic acid and its esters.

Particularly preferred are biodegradable aliphatic-aromatic polyesters from dicarboxylic acids-diols in which the aromatic diacid component consists of mixtures of polyfunctional aromatic acids of synthetic and renewable origin.

The aliphatic dicarboxylic acids of biodegradable polyesters from dicarboxylic acids-diols are aliphatic dicarboxylic acids with between 2 and 22 carbon atoms in the main chain and their esters. Preferred are dicarboxylic acids from renewable sources, their esters and their mixtures, among which adipic acid, pimelic acid, suberic acid, sebacic acid, azelaic acid, undecandioic acid, dodecandioic acid, brassylic acid and their mixtures are preferred.

Examples of aliphatic diols in biodegradable diacid-diol polyesters are: 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecandiol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol and mixtures thereof. Of these, 1,4-butanediol, 1,3-propanediol and 1,2-ethanediol and mixtures thereof are particularly preferred.

Preferably, mixtures of the polyester according to the invention with the biodegradable diol-diacid polyesters described above are characterised by a content of said biodegradable polyesters varying in the range between 5-95% w/w, more preferably between 10-90% w/w with respect to the sum of the weights of the copolyester according to the invention and the latter respectively. It is also possible to mix the polyester according to the invention with more than one aliphatic-aromatic polyester having an aromatic moiety consisting primarily of polyfunctional aromatic acids of both synthetic and renewable origin or mixtures thereof.

Both binary and ternary mixtures of the polyester according to the invention with said polyesters are also particularly preferred.

With regard to polyester mixtures according to the invention, the biodegradable polyesters from preferred hydroxy acids include: poly L lactic acid, poly D lactic acid and poly D-L lactic acid stereo complex, poly-ε-caprolactone, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyrate-octadecanoate, poly-3-hydroxybutyrate-4-hydroxybutyrate.

Preferably, mixtures of the polyester according to the invention with the biodegradable hydroxy acid polyesters described above are characterised by a content of said biodegradable polyesters varying in the range of 1-20% w/w, more preferably between 1-15% w/w with respect to the sum of the weights of the copolyester according to the invention and the latter respectively. Said mixtures are advantageously made by processes of reactive extrusion of the polyester according to the present invention with said polylactic acid polymer preferably in the presence of organic peroxides such as those mentioned above.

The polyester according to the invention may also be used in a mixture with polymers of natural origin such as, for example, starch, cellulose, chitin, chitosan, alginates, proteins such as gluten, zein, casein, collagen, gelatin, natural gums, purified, hydrolysed, basified or unprocessed lignins, etc., or derivatives thereof. Starches and celluloses may be modified, including, for example, starch or cellulose esters with a degree of substitution between 0.2 and 2.5, hydroxypropylated starches, starches modified with fatty chains, and cellophane. Starch mixtures are particularly preferred. Starch may also be used in both unstructured and gelatinised form or as a filler. Starch may be in the continuous or dispersed phase or it may be in co-continuous form. In the case of dispersed starch, the starch is preferably in a sub-micron form and more preferably of average diameter less than 0.5 μm.

Preferably, the mixtures of the polyester according to the invention with the polymers of natural origin described above are characterised by a content of said polymers of natural origin varying within the range of 1-30% w/w, more preferably between 2-15% w/w with respect to the sum of the weights of the copolyester according to the invention and the latter respectively.

The polyester according to the invention may also be used in mixtures with polyolefins, non-biodegradable polyesters, polyether-urethanes, polyurethanes, polyamides, polyamino acids, polyethers, polyureas, polycarbonates and mixtures thereof.

Preferred polyolefins include polyethylene, polypropylene, their copolymers, polyvinyl alcohol, polyvinyl acetate, polyethyl vinyl acetate and polyethylene vinyl alcohol.

Among non-biodegradable polyesters, PET, PBT, PTT are preferred, in particular with a renewables content >30% and furandicarboxylated polyalkylenes. Among the latter, furandicarboxylated polyethylene, furandicarboxylated polypropylene, furandicarboxylated polybutylene and their mixtures are particularly preferred.

Examples of polyamides are polyamide 6 and 6.6, polyamide 9 and 9.9, polyamide 10 and 10.10, polyamide 11 and 11.11, polyamide 12 and 12.12 and their combinations of the 6/9, 6/10, 6/11, 6/12 type.

The polycarbonates may be polyethylene carbonates, polypropylene carbonates, polybutylene carbonates, their mixtures and copolymers.

The polyethers may be polyethylene glycols, polypropylene glycols, polybutylene glycols, their copolymers and their mixtures with molecular weights from 70000 to 500000.

Preferably, mixtures of the polyester according to the invention with the polymers described above (polyolefins, non-biodegradable polyesters, polyester- and polyether-urethanes, polyurethanes, polyamides, polyamino acids, polyethers, polyureas, polycarbonates and mixtures thereof) are characterised by a content of said polymers varying in the range 0.5-99% w/w, more preferably between 5-50% w/w with respect to the sum of the weights of the copolyester according to the invention and the latter respectively.

The polyester production process according to the present invention may be carried out according to any of the processes known in the state of the art.

In particular, the polyester may advantageously be obtained by a polycondensation reaction. Advantageously, the polyester polymerisation process may be conducted in the presence of a suitable catalyst. Suitable catalysts may, by way of example, comprise organometallic tin compounds, for example stannoic acid derivatives, titanium compounds, for example ortho-butyl titanate, aluminium compounds, for example Al-triisopropyl, and antimony and zinc compounds.

The polyester according to the present invention is also obtainable by a reactive extrusion process from a precursor polyester comprising units derived from at least one dicarboxylic acid and at least one substantially linear diol with an MFI of 5-30 dl/g at 190°C and 2.16 kg, having a weight average molecular weight Mw measured by GPC in the range of 60000-120000 and containing active sites such as unsaturations in the amount of 0.1-1% in moles and/or terminal acid groups in the amount of 10-200 meq/kg of polymer, preferably 10-100 and even more preferably 10-50 meq/kg of polymer. The reactive extrusion process is carried out by the addition of a compound selected from peroxides, epoxides, carbodiimides or mixtures thereof such as those described above.

Preferably said precursor polyester has an MFI of 5-30 and more preferably 7-20 g/10 min at 190°C and 2.16 kg, a shear viscosity of 500-700 Pas and weight average molecular weight Mw preferably between 100000-130000.

The molecular weights Mn and Mw may be measured by Gel Permeation Chromatography (GPC). The determination may be carried out with the chromatographic system held at 40°C, using a set of two columns in series (particle diameters of 5 $\mu$m and 3 $\mu$m with mixed porosity), a refractive index detector, chloroform as eluent (flow rate 0.5 ml/min) and using polystyrene as reference standard.

Preferably, said precursor polyester has an unsaturations content of 0.1-0.8% and more preferably 0.2-0.7% in moles.

Unsaturations may be generated in situ during polymerisation or processing of the precursor polymer or through the insertion of appropriate unsaturated monomers or unsaturated chain terminators.

Polyesters with terminal unsaturations are particularly preferred.

Among the unsaturated chain terminators, those with the following structure are preferred:

$$T\text{-}(CH_2)_n\text{-}CH=CH_2$$

where "T" is a group capable of reacting with carboxyl and/or hydroxyl groups, e.g. a hydroxyl, carboxyl, amine, amide or ester group, and "n" 'is an integer between 0 and 13.

These unsaturated chain terminators may also be used in mixtures.

As for "T", it is preferably a hydroxyl or carboxyl group.

The integer "n" is preferably between 1 and 13, more preferably between 3 and 13 and even more preferably 8 or 9.

Particularly preferred unsaturated chain terminators are omega-undecenoic acid, omega-undecenyl alcohol and mixtures thereof.

The presence of unsaturations and/or adducts resulting from the reaction of these following reactive extrusion may be determined by various methods well known to those skilled in the art, such as NMR spectroscopy or polymer chain methanolysis reactions coupled with chromatographic methods combined with mass spectrometry.

Those skilled in the art will easily be able to identify structures related to either unsaturations as such or adducts resulting from their reaction following reactive extrusion.

As far as the measurement of unsaturation content by NMR is concerned, this may be done by 1H-NMR 300 MHz using a pulse-acquisition sequence characterised by a pulse phase of 30°, a spectral width = 4 kHz, a delay of 5 seconds and performing 6000 scans.

The content of terminal acid groups can be measured as follows: 1.5-3 g of the polyester is placed in a 100 ml conical flask together with 60 ml of chloroform. After complete dissolution of the polyester, 25 ml of 2-propanol are added and, immediately before analysis, 1 ml of deionised water. The resulting solution is titrated with a previously standardised solution of NaOH in ethanol. An appropriate indicator, such as a glass electrode for acid-base titration in non-aqueous solvents, is used to determine the equivalence point of the titration. The content of terminal acid groups is calculated from the consumption of NaOH solution in ethanol according to the following equation:

$$\text{Terminal acid groups content (μg/kg of polymer)} = \frac{[(Veq - Vb).T].1000}{P}$$

where:

Veq = ml of NaOH solution in ethanol at the equivalence point of the sample titration;
Vb = ml of NaOH solution in ethanol required to achieve pH = 9.5 during blank titration;
T = concentration of NaOH solution in ethanol expressed in moles/litre;
P = weight of sample in grams.

The process of producing the precursor polyester can be carried out according to any of the processes known in the state of the art described above.

The present invention also relates to an adherent film obtained from said biodegradable polyester and to the process for making said film. Said film has properties that make it suitable for numerous practical applications related to domestic and industrial consumption. Examples of such applications are food and non-food packaging, industrial packaging (e.g. pallets), for baling in agriculture, for wrapping waste.

The chemical-physical properties allow the polyester according to the invention to be efficiently fed to conventional equipment for the manufacture of adherent film typically used for PE or PVC, without any particular changes in the structure and operating conditions of the machinery. Through the specific combination of rheological characteristics and friction coefficient of the polyester according to the present invention, said film can also be advantageously produced by means of blow film-forming processes in which the bubble can be opened allowing single layer film reels to be collected downstream from the film-forming process. This feature is particularly advantageous in terms of productivity of the production process.

Preferably, the bubble blowing film-forming process is characterised by blow-up ratio values (BUR or transverse stretch) from 2 to 5, and drawdown ratio values (DDR or longitudinal stretch) in the machine direction (MD) from 5 to 60. For the purposes according to the present invention, DDR means a measure of the elongation undergone by the melt exiting the extruder in the direction of stretching; BUR means the ratio of the bubble diameter to the die diameter. Advantageously, during bubble blowing the process parameters are set to have a DDR/BUR ratio of 3 to 15.

The characteristics of the polyester according to the present invention make it possible to produce extremely thin films in the range of 3 to 50 microns. Preferably between 6 and 25 microns.

The film obtained from biodegradable polyester according to the present invention exhibits strong adhesion to both itself and other non-adherent surfaces, such as ceramics, glass, metal and plastics such as HDPE, LDPE, PP, PET, PVC.

In a preferred embodiment according to the present invention, said stretch film comprises several layers. Said multilayer film comprises at least one layer A comprising the composition according to the present invention and at least one layer B comprising at least one polymer selected from the group consisting of diacid-diol polyesters, hydroxy acid polyesters and synthetic polymers such as, for example, polyvinyl alcohol, ethylene vinyl alcohol, polyvinyl acetate, ethylvinyl acetate. Said films are preferably characterised by a mutual arrangement of said layers A and B selected from A/B, A/B/A and B/A/B. In a further particularly preferred embodiment, said layer B advantageously confers an enhanced barrier effect. Other layers, arranged in an intermediate position with respect to layers A and B (structure A/C/B/C/A, in which C is a further layer) may also be present. The multilayer film may be produced according to any of the processes known to those skilled in the art, for example by means of a co-extrusion process, a lacquering/spraying process or a lamination process.

Moreover, through the chemical and physical characteristics of the polyester according to the present invention the adherent film obtained from said polyester can be produced without the use of plasticisers or tackifiers such as, for example, polyisobutene or ethylene vinyl acetate. This makes it possible to appreciate a further significant difference between the film according to the present invention and PVC and polyethylene adherent films which, due to the presence of the aforementioned additives, have significant limitations on use in the food packaging sector. In a particularly preferred embodiment, the adherent film obtained from polyester according to the present invention is substantially free of plasticisers and tackifiers.

The adherent film obtained from the biodegradable polyester according to the present invention also has excellent mechanical properties which, through a specific combination of ease of tearing, strength and extensibility, make it particularly suitable for use in industrial packaging as well as food packaging.

Preferably said adherent film exhibits tear strength values of >70 N/mm, elongation at break >400%, modulus of elasticity >50 MPa and <400 MPa and tensile strength of >25 MPa in the transverse direction to the film-forming direction and tear strength values of >50 N/mm, elongation at break >200%, modulus of elasticity >100 MPa and tensile strength of >30 MPa in the longitudinal direction to the film-forming direction.

More preferably said adherent film exhibits tear strength values of >90 N/mm, elongation at break >450%, modulus of elasticity >70 MPa and <400 MPa and tensile strength of >45 MPa in the transverse direction to the film-forming direction and tear strength values of >50 N/mm, elongation at break >300%, modulus of elasticity >90 MPa and tensile strength of >35 MPa in the longitudinal direction to the film-forming direction.

With regard to mechanical properties, in accordance with the present invention these are determined according to ASTM D882 (tear at 23° C and 55% relative humidity and vo = 50 mm/min) and ASTM D1922 (tear at 23° C and 55% relative humidity).

The adherent film obtained from the biodegradable polyester according to the present invention is advantageously characterised by excellent optical properties. In particular, it preferably has Haze values <15, preferably <10%, and transmittance values greater than 80%, preferably greater than 90%, thereby enabling the user to identify an object wrapped therein without the need to unwrap the object. This characteristic is extremely advantageous when used for food packaging. Optical properties are determined in accordance with ASTM D1003.

In addition to the above-mentioned characteristics, the adherent film obtained from the biodegradable polyester according to the present invention advantageously has much higher water vapour permeability values than PVC and PE adherent films. In particular, it preferably shows VWTR values greater than 150 g/m$^2$/day, measured at 23°C 50% RH, on a film of 16 micron thickness, preferably between 300 and 900 g/m2/day.

The permeability characteristics are determined according to ASTM F1249.

The adherent film obtained from the biodegradable polyester according to the present invention can be used in existing machines in the retail sector without the need for modifications. This characteristic, which is particularly appreciated, is not to be considered obvious since many adherent films produced from biodegradable polymers do not possess these properties.

The invention will now be illustrated with one example of an embodiment, which is intended as an illustration and not a limitation of the scope of protection of the present patent application.

EXAMPLES

Examples 1-2:

Poly(1,4-butylene adipate-co-1,4-butylene terephthalate) [PBTA], with a content of 47% in moles of terephthalic acid with respect to the total dicarboxylic component. PBTA has an MFR of 4.8 g/10min (@ 190°C, 2.16 kg), a Poisson's ratio of 1083 (shear viscosity at 180°C of 1083 Pas and melt strength of 1,0 g-strength) and a terminal acid group content of 34 meq/kg.

Examples 3-4 (comparative):

Poly(1,4-butylene sebacate-co-1,4-butylene terephthalate) [PBTSeb], with a content of 56% in moles of terephthalic acid with respect to the total dicarboxylic component. PBTSeb is characterised by an MFR of 2.6 g/10min (@ 190°C, 2.16 kg), a Poisson's ratio of 394 (shear viscosity at 180°C of 1220 Pas and melt strength of 3,1 g-strength) and a terminal acid group content of 40 meq/kg.

Characterisation, film production and mechanical testing

The polyesters were analysed by gel permeation chromatography (GPC). Measurements were made at 40°C using an Agilent® 1100 chromatograph. The determination was performed using a set of two columns in series (particle diameters of 5 μm and 3 μm with mixed porosity), a refractive index detector, chloroform as eluent (flow rate 0.5 ml/min) and using polystyrene as reference standard.

Table 1 shows the characteristics of the polymers prepared

| Ex | Oligomer content ("q") | Mw | Mn | Mw/q |
|----|------------------------|--------|-------|-------|
| PBTA | 1.5 | 127760 | 72351 | 88110 |

(continued)

| Ex | Oligomer content ("q") | Mw | Mn | Mw/q |
|---|---|---|---|---|
| PBTSeb (comparative) | 1.7 | 178608 | 83511 | 105064 |

The PBTA and PBTSeb granules were fed to a Ghioldi model blown film machine with a 40 mm screw diameter and L/D 30 operating at 30 rpm. The film-forming head has an air gap of 0.9 mm and L/D 12.20 micron thick films (10+10) were obtained using the conditions described in Table 2 below:

Table 2

| Ex. | Film temperature (°C) | Blowing ratio (BBR) | Draw-down ratio (DDR) |
|---|---|---|---|
| 1 | 170 | 3.2 | 28 |
| 2 | 145 | 3.2 | 28 |
| 3 comparative | 170 | 2.5 | 36 |
| 4 comparative | 270 | 2.5 | 36 |

3 grams of film were analysed to determine the weight percentage of polyester oligomer ("q") having a molecular weight by GPC $\leq$ 10000, using the method described in the text.

Table 3

| Ex | Oligomer content ("q") | Mw | Mn | Mw/q |
|---|---|---|---|---|
| 1 | 1.7 | 126620 | 60933 | 74482 |
| 2 | 1.5 | 126610 | 62458 | 83073 |
| 3 comparative | 1.7 | 179622 | 81277 | 105660 |
| 4 comparative | 2.7 | 158780 | 78147 | 58807 |

The mechanical properties were determined according to ASTM D882 (traction at 23°C and 55% relative humidity and vo = 50 mm/min) in the longitudinal direction with respect to the film-forming direction.
The optical properties were determined according to ASTM D1003.
The coefficient of friction (COF) was determined according to the modification of the ASTM D1894 standard "Static and kinetic coefficients of friction of plastic films and sheets" described in the text.

Table 4

| Ex. | Tensile strength (MPa) | Elongation at break (%) | Modulus of elasticity (MPa) | Transmittance (%) | Haze (%) | Clarity (%) | COF | Clingability | Breaking behaviour during unwinding |
|---|---|---|---|---|---|---|---|---|---|
| 1 | 50 | 386 | 104 | 91 | 12 | 98 | 7 | +++ | ** |
| 2 | 59 | 402 | 119 | 91 | 7 | 99 | 5 | ++ | * |
| 3 comparative | 51 | 222 | 152 | 93 | 16 | Not available | 4 | - | * |
| 4 comparative | 31 | 494 | 91 | 93 | 2 | Not available | 32 | +++ | ***** |
| Key to Table 4: the term "Clingability" as it is known in the art is defining the adhesion capacity of the film (stickiness). +: Increase in stickiness, on a scale of 1 to 5 *: Increased possibility of breakage, on a scale of 1 to 5 -: No appreciable stickiness detected. | | | | | | | | | |

**Claims**

1. Multilayer film comprises at least one layer A and at least one layer B,

    wherein said **layer A** comprises a biodegradable aliphatic-aromatic polyester suitable for use in the production of packaging films having a friction coefficient between 5 and 10, measured with the method described in the description,
    said polyester being biodegradable according to EN 13432 and
    having a Poisson's ratio (RVE) between 800 and 1700, and
    comprising units derived from at least one dicarboxylic acid and at least one diol; and having:

    -

    $$Mn \geq 40000$$

    -

    $$Mw/q \leq 90000,$$

    wherein:

    q is the percentage by weight of polyester oligomers with a molecular weight $\leq$ 10000 as determined by GPC;
    the molecular weights "Mn" and "Mw", are measured by gel permeation chromatography (GPC) according to the method described in the description;
    the Poisson's ratio is calculated as the ratio of shear viscosity to melt strength (MS);
    shear viscosity is determined at 180°C with a flow gradient of g =103.7s- 1 using a 1 mm diameter capillary and L/D=30 according to ASTM D3835-90,
    melt strength (MS) is measured according to ISO 16790:2005 at 180°C and g =103 7s-l using a capillary of diameter of 1 mm and L/D=30 at a constant acceleration of 6 mm/sec2 and a stretching length of 110 mm;

    and wherein said **layer B** comprises at least one polymer selected from the group consisting of diacid-diol polyesters, hydroxy acid polyesters and synthetic polymers.

2. Multilayer film according to claim 1, wherein said synthetic polymers in layer B are selected from polyvinyl alcohol, ethylene vinyl alcohol, polyvinyl acetate, ethylvinyl acetate.

3. Multilayer film according to any of claims 1-2, **characterised by** a mutual arrangement of said layers A and B selected from A/B, A/B/A and B/A/B.

4. Multilayer film according to any of claims 1-3, comprising other layers, arranged in an intermediate position with respect to layers A and B.

5. Multilayer film according to claim 4, comprising a further layer C and having a structure A/C/B/C/A.

6. Method for producing the multilayer film of claims 1 to 5, comprising a co-extrusion process, a lacquering/spraying process, or a lamination process.


**Patentansprüche**

1. Mehrschichtfolie, umfassend wenigstens eine Schicht A und wenigstens eine Schicht B,

    wobei die Schicht A einen biologisch abbaubaren aliphatisch-aromatischen Polyester, der zur Verwendung bei der Herstellung von Verpackungsfolien geeignet ist, mit einem Reibungskoeffizienten zwischen 5 und 10, gemessen mit dem in der Beschreibung beschriebenen Verfahren, umfasst,
    wobei der Polyester gemäß EN 13432 biologisch abbaubar ist und
    eine Poisson-Zahl (RVE) zwischen 800 und 1700 aufweist und

Einheiten umfasst, die von wenigstens einer Dicarbonsäure und wenigstens einem Diol abgeleitet sind; und mit:

-

$$Mn \geq 40000$$

-

$$Mw/q \leq 90000,$$

wobei:

q der Gewichtsprozentanteil an Polyesteroligomeren mit einem Molekulargewicht von $\leq$ 10000, bestimmt durch GPC, ist;

die Molekulargewichte "Mn" und "Mw" durch Gelpermeationschromatographie (GPC) gemäß dem in der Beschreibung beschriebenen Verfahren gemessen werden; die Poisson-Zahl als das Verhältnis von Scherviskosität (shear viscosity) zu Schmelzfestigkeit (melt strength; MS) berechnet wird;

die Scherviskosität bei 180°C mit einem Flussgradienten von g = 103,7 s$^{-1}$ unter Verwendung einer Kapillare von 1 mm Durchmesser und L/D = 30 gemäß ASTM D3835-90 bestimmt wird,

die Schmelzfestigkeit (MS) gemäß ISO 16790:2005 bei 180°C und g = 103,7 s$^{-1}$ unter Verwendung einer Kapillare von 1 mm Durchmesser und L/D = 30 bei einer konstanten Beschleunigung von 6 mm/sec$^2$ und einer Strecklänge von 110 mm bestimmt wird;

und wobei die Schicht B wenigstens ein Polymer umfasst, ausgewählt aus der Gruppe, bestehend aus Disäure-Diol-Polyestern, Hydroxysäurepolestern und synthetischen Polymeren.

2. Mehrschichtfolie gemäß Anspruch 1, wobei die synthetischen Polymere in Schicht B aus Polyvinylalkohol, Ethylenvinylalkohol, Polyvinylacetat, Ethylvinylacetat ausgewählt sind.

3. Mehrschichtfolie gemäß irgendeinem der Ansprüche 1-2, **gekennzeichnet durch** eine gegenseitige Anordnung der Schichten A und B, ausgewählt aus A/B, A/B/A und B/A/B.

4. Mehrschichtfolie gemäß irgendeinem der Ansprüche 1-3, umfassend andere Schichten, die in einer intermediären Position in Bezug auf die Schichten A und B angeordnet sind.

5. Mehrschichtfolie gemäß Anspruch 4, die umfasst eine weitere Schicht C und eine Struktur A/C/B/C/A aufweist.

6. Verfahren zum Herstellen der Mehrschichtfolie der Ansprüche 1 bis 5, umfassend einen Coextrusionsprozess, einen Lackier-/Sprühprozess oder einen Laminierprozess.

**Revendications**

1. Film multicouche comprenant au moins une couche A et au moins une couche B,

dans lequel ladite couche A comprend un polyester aliphatique-aromatique biodégradable approprié pour une utilisation dans la production de films d'emballage ayant un coefficient de frottement compris entre 5 et 10, mesuré avec le procédé décrit dans la description,

ledit polyester étant biodégradable selon la norme EN 13432 et

ayant un coefficient de Poisson (RVE) compris entre 800 et 1 700, et

comprenant des motifs dérivés d'au moins un diacide carboxylique et d'au moins un diol ; et

ayant :

-

$$Mn \geq 40\,000$$

-

$$Mw/q \leq 90\ 000,$$

dans lequel :

q est le pourcentage en poids d'oligomères de polyester ayant un poids moléculaire $\leq$ 10 000 tel que déterminé par GPC ;

les poids moléculaires « Mn » et « Mw » sont mesurés par chromatographie à perméation de gel (GPC) selon le procédé décrit dans la description ;

le coefficient de Poisson est calculé comme le rapport de la viscosité de cisaillement sur la résistance à la fusion (MS) ;

la viscosité de cisaillement est déterminée à 180 °C avec un gradient d'écoulement g =103,7s- 1 en utilisant un capillaire de diamètre 1 mm et L/d=30 selon la norme ASTM D3835-90,

la résistance à la fusion (MS) est mesurée selon la norme ISO 16790:2005 à 180 °C et g =103 7s-1 en utilisant un capillaire de diamètre 1 mm et L/d = 30 à une accélération constante de 6 mm/sec2 et une longueur d'étirement de 110 mm ;

et dans lequel ladite couche B comprend au moins un polymère sélectionné dans le groupe constitué par les polyesters de diacide-diol, les polyesters d'hydroxyacide et les polymères synthétiques.

2. Film multicouche selon la revendication 1, dans lequel lesdits polymères synthétiques dans la couche B sont choisis parmi un poly(alcool vinylique), un éthylène alcool vinylique, un poly(acétate de vinyle), un acétate d'éthylvinyle.

3. Film multicouche selon l'une quelconque des revendications 1 et 2, **caractérisé par** un agencement mutuel desdites couches A et B choisi parmi A/B, A/B/A et B/A/B.

4. Film multicouche selon l'une quelconque des revendications 1 à 3, comprenant d'autres couches, agencées dans une position intermédiaire par rapport aux couches A et B.

5. Film multicouche selon la revendication 4, comprenant une autre couche C et ayant une structure A/C/B/C/A.

6. Procédé de fabrication du film multicouche selon les revendications 1 à 5, comprenant un procédé de co-extrusion, un procédé de laquage/pulvérisation, ou un procédé de stratification.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2632970 A

- WO 2011036272 A1